# FASCICULE DE BREVET EUROPEEN

(11) **EP 1 266 826 B1**
(45) Date de publication et mention de la délivrance du brevet: **02.02.2005**
(21) Numéro de dépôt: 02291443.6
(22) Date de dépôt: 11.06.2002
(51) Int. Cl.: B64D 27/26

(54) **Dispositif de reprise d'efforts générés par un moteur d'aéronef**
Schubbefestigung eines Triebwerkes an einem Luftfahrzeug
Aircraft engine thrust mount

(30) Priorité: 13.06.2001 FR 0107728
(43) Date de publication de la demande: 18.12.2002
(73) Titulaire: AIRBUS France, 31060 Toulouse Cedex 03 (FR)
(72) Inventeur: Levert, Stéphane, 31200 Toulouse (FR); Roszak, Sébastien, 31100 Toulouse (FR)
(74) Mandataire: Poulin, Gérard

(56) Documents cités:
- EP-A- 0 257 665
- EP-A- 1 031 507
- US-A- 6 059 227

## Description

### Domaine technique

L'invention concerne un dispositif conçu pour reprendre les efforts générés par un moteur d'aéronef, afin de les retransmettre à une structure de l'aéronef, telle qu'un élément de voilure ou de fuselage, au travers d'un mât réacteur.

De façon plus précise, l'invention concerne un dispositif chargé de reprendre le couple moteur ainsi que les efforts engendrés par le moteur selon des directions latérale et verticale par rapport à un axe longitudinal du moteur.

### Etat de la technique

Les moteurs qui équipent les aéronefs sont suspendus sous la voilure ou accrochés latéralement sur le fuselage par l'intermédiaire d'un mât réacteur.

La liaison entre le moteur et le mât réacteur est assurée par des systèmes généralement constitués par deux ou trois dispositifs d'accrochage complémentaires, remplissant chacun une fonction distincte.

Les documents US-A-5 620 154, US-A-5 275 357 et US-A-6 059 227 décrivent différents dispositifs d'accrochage existants. Chacun de ces dispositifs comprend une structure d'accrochage principale et une structure d'accrochage de secours. La structure d'accrochage principale assure la transmission des efforts lors du fonctionnement normal, c'est-à-dire lorsque toutes les pièces du dispositif d'accrochage sont intactes. La structure d'accrochage de secours est prévue pour assurer la continuité de la fonction de transmission des efforts entre le moteur et l'avion en cas de rupture de l'une des pièces de la structure d'accrochage principale.

Les dispositifs d'accrochage existants, tels que ceux qui sont illustrés par les documents cités précédemment, comprennent habituellement une ferrure intermédiaire, fixée au mât réacteur par exemple au moyen de vis, et au moins deux bielles rotulées, assurant la liaison entre la ferrure et le moteur. Le montage rotulant des bielles sur la ferrure et sur le moteur permet d'éviter que la structure reprenne des efforts suivant l'axe longitudinal du moteur.

Les dispositifs d'accrochage existants sont fixés d'une part au moteur et d'autre part au mât réacteur. Celui-ci constitue l'interface de liaison entre l'ensemble propulsif, constitué par le moteur et la nacelle qui l'entoure, et la structure de l'aéronef, constituée par la voilure ou le fuselage.

Plus précisément, le mât réacteur permet de transmettre à l'avion les efforts générés par le moteur. Il assure aussi le cheminement du carburant, de l'électricité, de l'hydraulique et de l'air entre le moteur et l'aéronef. De surcroît, il doit satisfaire à différentes contraintes telles qu'une traînée aérodynamique, une masse et un coût minimaux pour une sécurité maximale.

Habituellement, un mât réacteur comprend deux sous-ensembles formés par une structure primaire et une structure secondaire, ainsi que des équipements.

La structure primaire du mât réacteur est constituée d'une ossature et de panneaux latéraux. Elle assure la transmission à la structure de l'aéronef des efforts exercés par le moteur. Pour cette raison, sa rigidité doit être importante.

La structure secondaire du mât réacteur comprend tous les éléments de tôlerie qui sont ajoutés à la structure primaire. Ces éléments remplissent différentes fonctions telles que des fonctions aérodynamiques (afin de limiter la traînée due au mât réacteur), des fonctions de protection et de ségrégation des systèmes qui traversent le mât réacteur, des fonctions d'accessibilité aux organes de la structure primaire, etc..

Sur les avions modernes, la structure primaire du mât réacteur est de type "caisson". Elle comprend un longeron inférieur, un longeron supérieur avant, un longeron supérieur arrière, des nervures de raccordement desdits longerons et des panneaux latéraux refermant le mât réacteur. Dans certains cas, une ferrure intermédiaire est interposée entre le dispositif d'accrochage du moteur et le mât réacteur. Elle est généralement fixée sur l'une des ferrures par quatre boulons.

Dans cet agencement connu, les efforts générés par le moteur sont transmis de la ferrure intermédiaire au caisson du mât puis à la voilure ou au fuselage au travers des quatre boulons, de la nervure et des panneaux latéraux du mât réacteur. La nervure remplit la fonction de stabilisation des panneaux latéraux sollicités en traction et compression.

Si l'on utilise un moteur générant des efforts plus importants que sur les avions existants, tel qu'un moteur présentant une masse et un niveau de poussée accrus par rapport aux moteurs existants, tous les éléments actifs du dispositif d'accrochage du moteur et du mât réacteur doivent être capables de reprendre ces efforts et de les transmettre à la voilure ou au fuselage.

Pour pouvoir reprendre les efforts générés par l'augmentation de la masse et du niveau de poussée de nouveaux moteurs, il est nécessaire d'augmenter le nombre de fixations entre le mât et le dispositif d'accrochage du moteur. Le nombre de fixations peut être doublé par exemple. A cause de cette augmentation, on peut augmenter la taille de la ferrure qui reçoit ces fixations et la rigidifier.

Cela peut alors conduire à augmenter les dimensions de la nervure du mât réacteur au travers de laquelle les efforts sont habituellement transmis à la voilure ou au fuselage, pour tenir compte du changement de dimensions de la ferrure intermédiaire et de l'augmentation des efforts à reprendre.

Cependant, les grandes dimensions alors atteintes par la nervure conduiraient à des problèmes importants. Ainsi, l'usinage d'une pièce de si grandes dimensions est difficile et très long car il faut usiner dans la masse. De plus, une telle pièce est lourde, encombrante et chère. En outre, elle est difficile à monter. Enfin, les efforts transitent au travers de toute la ferrure et n'ont donc pas de direction de cheminement privilégiée. Cela impose d'utiliser une ferrure rigide dans sa totalité, pour éviter des problèmes de criques et de cassure, ce qui augmente encore plus sa masse.

### Exposé de l'invention

L'invention a précisément pour objet un dispositif de reprise d'efforts générés par un moteur d'aéronef, dont la conception originale lui permet de simplifier son usinage et son montage, et de limiter sa masse, son encombrement et son coût, lorsque le dimensionnement du moteur conduit à une augmentation des dimensions de la ferrure intermédiaire.

Conformément à l'invention, ce résultat est obtenu au moyen d'un dispositif de reprise d'efforts générés par un moteur d'aéronef, comprenant un mât réacteur apte à être fixé à une structure de l'aéronef et au moins un dispositif d'accrochage fixé au mât réacteur et apte à supporter le moteur, le dispositif d'accrochage comportant une ferrure intermédiaire fixée au mât par des premiers moyens de fixation, caractérisé en ce que le mât réacteur comporte, en face du dispositif d'accrochage, plusieurs ferrures de mât indépendantes les unes des autres, la ferrure intermédiaire étant fixée à chacune des ferrures de mât par les premiers moyens de fixation.

Cet agencement permet de transmettre les efforts au travers de ferrures de mât symétriques et de petites dimensions, dont l'usinage est aisé et rapide. De plus, ces ferrures de mât indépendantes sont plus légères et donc plus faciles à manipuler et à monter sur le mât.

L'indépendance des ferrures de mât permet de canaliser le cheminement des efforts du dispositif d'accrochage vers la voilure ou le fuselage, dans une seule direction principale. On assure ainsi une meilleure répartition des efforts. Chacune des ferrures de mât est donc sollicitée de manière équilibrée, ce qui lui évite une fatigue structurale préjudiciable.

De façon classique, le mât réacteur comporte généralement aussi un longeron inférieur. Les premiers moyens de fixation comprennent alors avantageusement des boulons reliant la ferrure intermédiaire aux ferrures de mât au travers du longeron inférieur.

Habituellement, le mât réacteur comporte généralement aussi deux panneaux latéraux. De préférence, ces panneaux sont alors respectivement fixés sur les ferrures de mât indépendantes par des deuxièmes moyens de fixation.

Dans un mode de réalisation préféré de l'invention, la ferrure intermédiaire est fixée à deux paires de ferrures de mât indépendantes par les premiers moyens de fixation

Avantageusement, dans ce mode de réalisation préféré de l'invention, le mât réacteur comporte de plus une nervure de rigidification, placée entre les deux paires de ferrures de mât indépendantes et fixée à celles-ci par des troisièmes moyens de fixation.

### Brève description des dessins

On décrira à présent, à titre d'exemple illustratif et non limitatif, un mode de réalisation préféré de l'invention, en se référant aux dessins annexés, dans lesquels :
- la figure 1 est une vue en perspective éclatée qui représente un dispositif de reprise d'efforts conforme à l'invention ; et
- la figure 2 est une vue en perspective qui représente plus en détails la partie basse d'une ferrure de mât utilisée dans le dispositif de la figure 1, ainsi que les pièces attenantes.

### Description détaillée d'un mode de réalisation préféré de l'invention

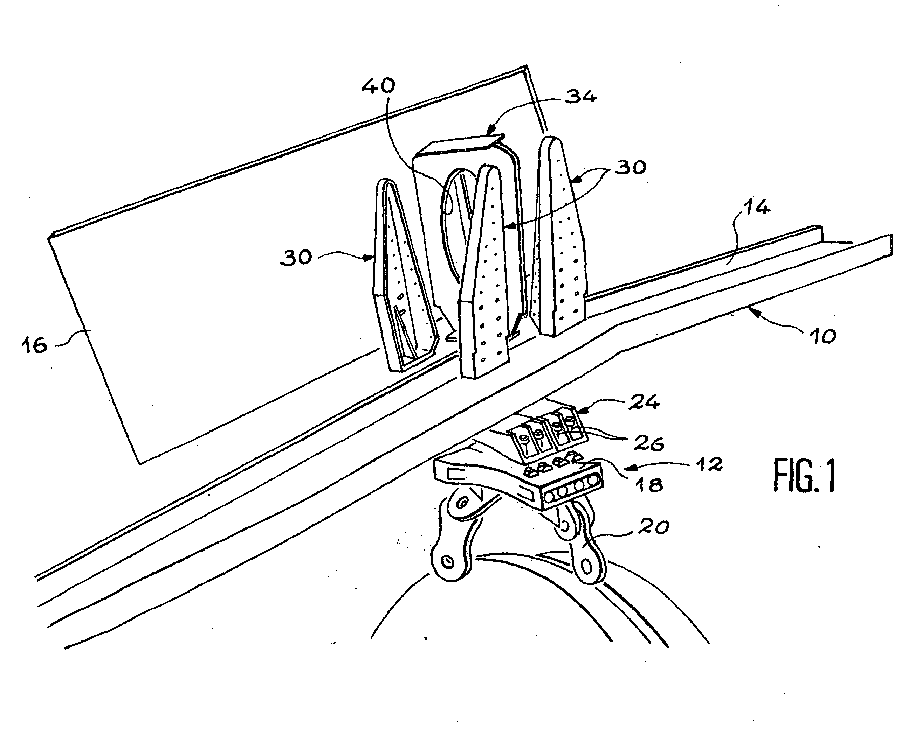

Comme l'illustre schématiquement et de façon volontairement incomplète la figure 1, un dispositif de reprise d'efforts conforme à l'invention comprend un mât réacteur 10 et un dispositif d'accrochage 12.

Le mât réacteur 10 est prévu pour être fixé à un élément de structure d'un aéronef, tel qu'un élément de voilure ou de fuselage. Cette fixation est assurée par des moyens connus, qui ne font pas partie de l'invention. Pour faciliter la lecture de la figure 1, la partie supérieure du mât réacteur 10 intégrant les moyens de fixation de celui-ci à la structure de l'aéronef est volontairement omise.

Plus précisément, on a seulement représenté sur la figure 1 le longeron inférieur 14, un seul 16 des deux panneaux latéraux et les pièces du mât réacteur 10 assurant la reprise des efforts, conformément à l'invention. Ces pièces seront décrites en détail par la suite.

Le dispositif d'accrochage 12 sert d'interface entre le moteur (non représenté) de l'aéronef et le mât réacteur 10. Plus précisément, dans le mode de réalisation représenté à titre d'exemple sur les figures, il est conçu pour reprendre le couple moteur ainsi que les efforts exercés selon des directions latérale et verticale (dans le cas d'un moteur suspendu à la voilure) par rapport à l'axe longitudinal du moteur. A cet effet, le dispositif d'accrochage 12 est prévu pour être fixé au moteur par des moyens connus (non représentés) et il est fixé au mât réacteur 10 d'une manière qui sera décrite en détail par la suite.

La structure et l'agencement du dispositif d'accrochage 12 sont, pour l'essentiel, classiques. Il n'en sera donc pas fait de description détaillée.

Pour la bonne compréhension de l'invention, il est rappelé que ce dispositif comprend une semelle 18 ainsi qu'au moins deux bielles rotulées 20, assurant la liaison entre le moteur et la semelle 18 selon des directions circonférentielles par rapport au moteur. Dans le mode de réalisation représenté, le dispositif d'accrochage 12 comprend également deux bielles rotulées 22 reliant la semelle 18 au moteur selon des directions orientées en oblique par rapport à l'axe longitudinal du moteur

La semelle 18 du dispositif d'accrochage 12 est fixée au mât réacteur 10 par l'entremise d'une ferrure intermédiaire 24. Plus précisément, la semelle 18 est fixée à la ferrure intermédiaire 24 par des moyens de fixation matérialisés par exemple par des boulons 26.

L'invention s'applique notamment au cas où les efforts engendrés par le moteur, par exemple en raison de sa poussée et de sa masse, sont plus élevés que sur la plupart des avions existants. Pour cette raison, on peut augmenter la taille de la ferrure intermédiaire 24 en doublant ses dimensions, par exemple, par rapport à celles des ferrures intermédiaires utilisées habituellement, afin d'obtenir une rigidité satisfaisante. En conséquence, on utilise de préférence huit boulons 26 pour fixer la ferrure intermédiaire 24 à la semelle 18, au lieu de quatre habituellement.

La ferrure intermédiaire 24 est fixée au mât réacteur 10 par des moyens de fixation tels que des boulons 28. Dans le cas représenté où les dimensions de la ferrure intermédiaire 24 sont doublées par rapport à celles d'une ferrure classique de l'art antérieur, on utilise huit boulons 28 au lieu de quatre habituellement.

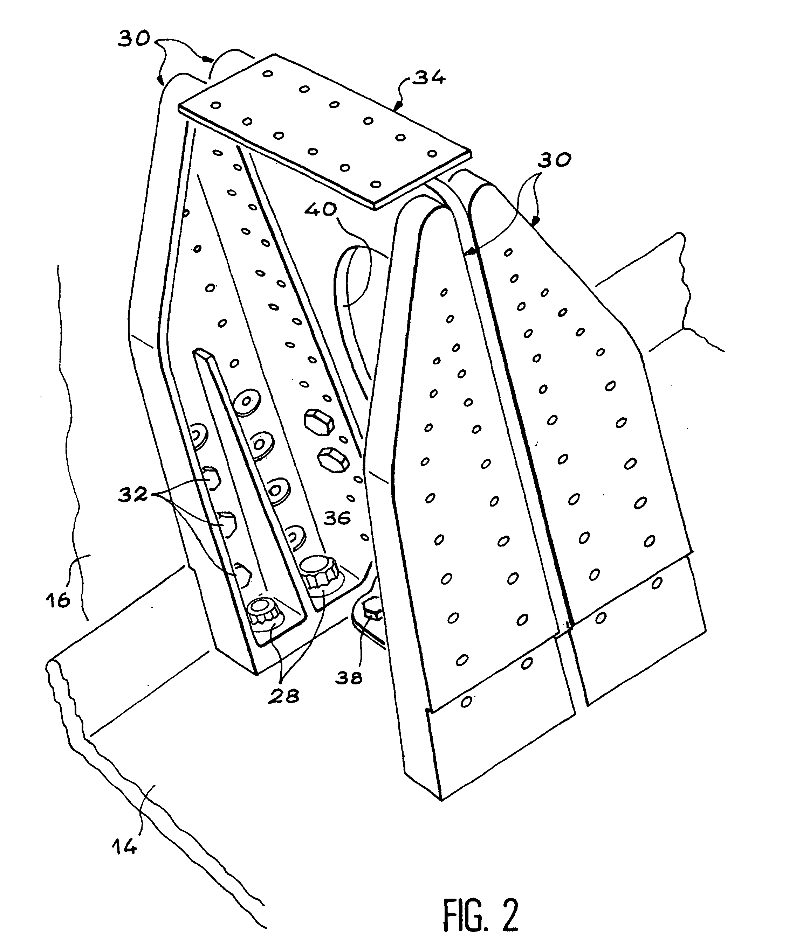

Comme le montrent clairement les figures 1 et 2, le mât réacteur 10 comporte également, conformément à l'invention, des ferrures de mât indépendantes 30 assurant la reprise des efforts transmis au mât réacteur par la ferrure intermédiaire 24.

De façon plus précise, quatre ferrures de mât indépendantes 30 sont montées au-dessus du longeron inférieur 14, dans la partie de celui-ci qui surplombe la ferrure intermédiaire 24. Ainsi, une paire de ferrures de mât indépendantes 30 s'étend vers le haut à partir du longeron inférieur 14, le long de chacun des panneaux latéraux 16 et à l'intérieur de celui-ci.

La ferrure intermédiaire 24 est fixée à chacune des ferrures de mât 30 par deux des boulons 28, de façon telle que chaque boulon 28 traverse des trous alignés (non représentés) formés à cet effet dans la ferrure intermédiaire 24, dans le longeron inférieur 14 et dans la ferrure de mât 30.

En outre, des moyens de fixation tels que des boulons 32 traversent des trous alignés (non représentés) formés dans les ferrures de mât 30 et dans les panneaux latéraux 16. Ces boulons 32 solidarisent les ferrures de mât indépendantes 30 aux panneaux latéraux 16.

Comme l'illustrent les figures, une nervure de soutien 34 est montée entre les deux paires de ferrures de mât indépendantes 30, de façon à conserver la géométrie du mât. La nervure de soutien 34 ne fait transiter aucun effort. Elle n'a donc pas besoin d'être rigide, ni dimensionnée en fonction des efforts à transmettre entre le moteur et la structure de l'avion.

La nervure de rigidification 34 est fixée aux ferrures de mât indépendantes 30 par des moyens de fixation tels que des boulons 36. Elle est également fixée au longeron inférieur 14 du mât réacteur 10 par des moyens de fixation tels que des boulons 38. En outre, la nervure de rigidification 34 comporte, de façon connue, un évidement central 40 permettant le passage de câbles, canalisations ou autres, tels que des câbles électriques, à l'intérieur du mât réacteur 10.

Dans l'agencement qui vient d'être décrit en se référant aux figures 1 et 2, les boulons 26 permettent de faire transiter les efforts générés par le moteur vers la ferrure intermédiaire 24. Ces efforts sont ensuite transmis de la ferrure intermédiaire 24 vers les ferrures de mât 30 au travers des boulons 28. Pour finir, les efforts précités sont transmis des ferrures de mât 30 aux panneaux latéraux 16 par les boulons 32.

Par conséquent, à la différence des dispositifs de reprise d'effort classiques, les ferrures de mât 30 permettent de faire cheminer les efforts selon une direction de cheminement principale privilégiée. La majeure partie des efforts transite donc par les ferrures de mât 30 et les boulons 32 vers les panneaux latéraux 16. A l'inverse, seule une faible partie des efforts transite vers la nervure de rigidification 34 au travers des boulons 36, ce qui ne remet pas en cause l'intégrité de ladite nervure, qui n'est présente que pour rigidifier l'ensemble et n'est pas dimensionnée pour faire transiter des efforts.

Bien entendu, l'invention n'est pas limitée au mode de réalisation qui vient d'être décrit à titre d'exemple. En particulier, les boulons 26, 28, 32 et 36 peuvent être remplacés par tous moyens de fixation techniquement équivalents tels que des rivets, des vis, etc. sans sortir du cadre de l'invention.

## Revendications

1. Dispositif de reprise d'efforts générés par un moteur d'aéronef, comprenant un mât réacteur (10) apte à être fixé à une structure de l'aéronef et au moins un dispositif d'accrochage (12) fixé au mât réacteur (10) et apte à supporter le moteur, le dispositif d'accrochage (12) comportant une ferrure intermédiaire (24) fixée au mât réacteur (10) par des premiers moyens de fixation (28), **caractérisé en ce que** le mât réacteur (10) comporte, en face du dispositif d'accrochage (12), plusieurs ferrures de mât (30) indépendantes les unes des autres, la ferrure intermédiaire (24) étant fixée à chacune des ferrures de mât (30) par les premiers moyens de fixation (28).

2. Dispositif selon la revendication 1, dans lequel le mât réacteur (10) comporte de plus un longeron inférieur (14), les premiers moyens de fixation comprenant des boulons (28) reliant la ferrure intermédiaire (24) aux ferrures de mât (30) au travers du longeron inférieur (14).

3. Dispositif selon l'une quelconque des revendications 1 et 2, dans lequel le mât réacteur (10) comporte de plus deux panneaux latéraux (16), respectivement fixés sur les ferrures de mât indépendantes (30) par des deuxièmes moyens de fixation (32).

4. Dispositif selon l'une quelconque des revendications précédentes, dans lequel la ferrure intermédiaire (24) est fixée à deux paires de ferrures de mât (30) indépendantes par les premiers moyens de fixation (28).

5. Dispositif selon la revendication 4, dans lequel le mât réacteur (10) comporte de plus une nervure de soutien (34), placée entre les deux paires de ferrures de mât (30) indépendantes et fixée à celles-ci par des troisièmes moyens de fixation (36).

## Patentansprüche

1. Vorrichtung zur Aufnahme von von einem Luftfahrzeug-Triebwerk erzeugten Kräften mit einem Reaktionsmast (10), der an einer Struktur des Luftfahrzeugs befestigt werden kann, und einer Aufhängungsvorrichtung (12), die am Reaktionsmast (10) befestigt und zum Haltern des Motors geeignet ist, wobei die Aufhängungsvorrichtung (12) ein durch erste Befestigungsmittel (28) am Reaktionsmast (10) befestigtes Zwischenbeschlagteil (24) umfasst, **dadurch gekennzeichnet, dass** der Reaktionsmast (10) gegenüber der Aufhängungsvorrichtung (12) mehrere voneinander unabhängige Mast-Beschlagteile (30) aufweist, wobei das Zwischen-Beschlagteil (24) an jedem der Mast-Beschlagteile (30) durch die ersten Befestigungsmittel (28) befestigt ist.

2. Vorrichtung nach Anspruch 1, wobei der Reaktionsmast (10) außerdem einen unteren Längsträger (14) aufweist und die ersten Befestigungsmittel Bolzen (28) umfassen, welche das Zwischenbeschlagteil (24) mit den Mast-Beschlagteilen (30) über den Längsträger (14) verbinden.

3. Vorrichtung nach einem der Ansprüche 1 oder 2, wobei der Reaktionsmast (10) außerdem zwei Seitenplatten (16) umfasst, die jeweils an den unabhängigen Mast-Beschlagteilen (30) durch zweite Befestigungsmittel (32) befestigt sind.

4. Vorrichtung nach einem der vorangehenden Ansprüche, wobei das Zwischenbeschlagteil (24) an zwei Paaren von voneinander unabhängigen Mast-Beschlagteilen durch die ersten Befestigungsmittel (28) befestigt ist.

5. Vorrichtung nach Anspruch 4, wobei der Reaktionsmast (10) außerdem eine zwischen den beiden Paaren unabhängiger Mast-Beschlagteile (30) angeordnete und an diesen durch dritte Befestigungsmittel (36) befestigte Stützrippe (34) umfasst.

## Claims

1. Device for recovering forces generated by an aircraft engine, comprising an engine strut (10) able to be fixed to a structure of the aircraft and at least one attachment device (12) fixed to the engine strut (10) and suitable for supporting the engine, the attachment device (12) comprising an intermediate fitting (24) fixed to the engine strut (10) by the first fixation means (28), **characterised in that** the engine strut (10) comprises, facing the attachment device (12), several strut fittings (30) independent from each other, the intermediate fitting (24) being fixed to each of the strut fittings (30) by the first fixation means (28).

2. Device according to claim 1, **characterised in that** the engine strut (10) furthermore comprises a lower spar (14), the first fixation means comprising bolts (28) connecting the intermediate fitting (24) to the strut fittings (30) through the lower spar (14).

3. Device according to one or the other of claims 1 and 2, **characterised in that** the engine strut (10) also comprises two lateral panels (16), fixed respectively on the fittings of the independent struts (30) by the second fixation means (32).

4. Device according to any one of the preceding claims, **characterised in that** the intermediate fitting (24) is fixed to two pairs of independent strut fittings (30) by the first fixation means (28).

5. Device according to claim 4, **characterised in that** the engine strut (10) also comprises a support rib (34), placed between the two pairs of independent strut fittings and fixed to the latter by third fixation means (36).
